# EUROPÄISCHE PATENTSCHRIFT

(11) **EP 3 294 548 B1**
(45) Veröffentlichungstag und Bekanntmachung des Hinweises auf die Patenterteilung: **25.05.2022**
(21) Anmeldenummer: 16723070.5
(22) Anmeldetag: 10.05.2016
(51) Int. Cl.: B32B 17/10, C03C 17/34, B60J 10/70

(54) **SCHEIBE MIT WÄRMESTRAHLUNG REFLEKTIERENDER BESCHICHTUNG, DIREKT AUF DER WÄRMESTRAHLUNG REFLEKTIERENDEN BESCHICHTUNG AUFGEBRACHTEM OPAKEM ABDRUCK UND AUF DEM OPAKEN ABDECKDRUCK ANGEBRACHTEM BEFESTIGUNGS- ODER DICHTELEMENT**
PANE WITH THERMAL RADIATION REFLECTING COATING, OPAQUE MASKING PRINT APPLIED DIRECTLY TO THE THERMAL RADIATION REFLECTING COATING AND FASTENING OR SEALING ELEMENT APPLIED ON THE OPAQUE MASKING PRINT
VITRE AVEC REVÊTEMENT RÉFLÉCHISSANT LE RAYONNEMENT THERMIQUE, IMPRESSION DE MASQUAGE OPAQUE APPLIQUÉ DIRECTEMENT SUR LE REVÊTEMENT RÉFLÉCHISSANT LE RAYONNEMENT THERMIQUE ET ÉLÉMENT DE FIXATION OU D'ÉTANCHÉITÉ APPLIQUÉ SUR L'IMPRESSION DE MASQUAGE OPAQUE

(30) Priorität: 15.05.2015 EP 15167777
(43) Veröffentlichungstag der Anmeldung: 21.03.2018
(73) Patentinhaber: SAINT-GOBAIN GLASS FRANCE, 92400 Courbevoie (FR)
(72) Erfinder: MANZ, Florian, 52064 Aachen (DE); HAGEN, Jan, 53123 Bonn (DE)
(74) Vertreter: Feist, Florian Arno
(86) Internationale Anmeldenummer: PCT/EP2016/060475
(87) Internationale Veröffentlichungsnummer: WO 2016/184732

(56) Entgegenhaltungen:
- EP-A1- 0 576 179
- EP-A1- 2 639 032
- EP-A2- 0 434 656
- EP-A2- 0 515 847
- EP-A2- 1 281 613
- WO-A1-2013/131667
- WO-A1-2014/127868
- DE-T2- 69 903 668
- DE-U1-202013 006 875
- TW-A- 201 342 141
- US-A- 5 492 951
- US-A1- 2014 154 434
- US-B1- 6 309 755

## Beschreibung

Die Erfindung betrifft eine Scheibe mit Wärmestrahlung reflektierender Beschichtung und darauf angebrachtem Befestigungs- oder Dichtelement, wobei zwischen der Wärmestrahlung reflektierenden Beschichtung und dem Befestigungs- oder Dichtelement ein opaker Abdeckdruck angeordnet ist, ein Verfahren zu deren Herstellung und deren Verwendung.

Der Innenraum eines Kraftfahrzeugs kann sich im Sommer bei hohen Umgebungstemperaturen und intensiver direkter Sonneneinstrahlung stark erwärmen. Ist die Außentemperatur geringer als die Temperatur im Fahrzeuginnenraum, was insbesondere im Winter auftritt, so wirkt eine kalte Scheibe als Wärmesenke, die von den Insassen als unangenehm empfunden wird. Auch muss eine hohe Heizleistung der Klimaanlage bereitgestellt werden, um eine Auskühlung des Innenraums über die Fahrzeugscheiben zu vermeiden.

Wärmestrahlung reflektierende Beschichtungen (sogenannte Low-E-Beschichtungen) sind bekannt. Eine solche Beschichtung reflektiert einen erheblichen Teil der Sonnenstrahlung insbesondere im Infrarotbereich, was im Sommer zu einer verringerten Erwärmung des Fahrzeuginnenraums führt. Die Beschichtung verringert außerdem die Aussendung von langwelliger Wärmestrahlung einer erwärmten Scheibe in den Fahrzeuginnenraum hinein, wenn die Beschichtung auf der dem Fahrzeuginnenraum zugewandten Oberfläche einer Scheibe aufgebracht ist. Eine solche Beschichtung verringert außerdem bei niedrigen Außentemperaturen im Winter die Abstrahlung der Wärme des Innenraums in die äußere Umgebung.

Fahrzeugscheiben werden häufig mit Befestigungs- oder Dichtelementen versehen. Beispiele hierfür sind Kleberaupen zur Befestigung der Scheibe an der Fahrzeugkarosserie, Dichtlippen zur Abdichtung des Spalts zwischen Scheibe und Fahrzeugkarosserie oder Klebemittel zum Anbringen von Anbauteilen wie beispielsweise Griffen zum Öffnen des Fensters oder einem Rückspiegel. Die Befestigungs- oder Dichtelemente können hergestellt und nachträglich an die Scheibe angeklebt oder insbesondere auch direkt an die Scheibe extrudiert werden. Verfahren zum Anextrudieren von polymeren Elementen sind beispielsweise aus DE 196 04 397 C1, DE 42 32 554 C1 und DE 39 30 414 A1 bekannt.

Diese Befestigungs- oder Dichtelemente sind bei Fahrzeugscheiben typischerweise auf derselben Oberfläche wie die Low-E-Beschichtung aufgebracht, nämlich auf der innenraumseitigen Oberfläche. Dies kann zu Problemen führen, da die Low-E-Beschichtung mit einer Veränderung der Oberflächeneigenschaften der Scheibe verbunden ist, insbesondere die Adhäsions- und Adsorptionseigenschaften der Scheibe beeinflusst. Dadurch wird das für eine Massenfertigung notwendige reproduzierbare und beständige Anbringen von Befestigungs- oder Dichtelementen negativ beeinflusst. Zudem kann die Anwesenheit der Low-E-Beschichtung die Haftung des Befestigungs- oder Dichtelements an der Scheibe schwächen.

Um dieses Problem zu umgehen, ist es möglich, die Low-E-Beschichtung von dem Bereich der Scheibe, auf dem das Befestigungs- oder Dichtelement angebracht werden soll, ohne Beschichtung auszubilden. So kann etwa ein umlaufender Randbereich der Scheibe, auf dem eine Kleberaupe oder Dichtlippe angeordnet werden soll, nachträglich von der Beschichtung befreit oder bereits beim Aufbringen der Beschichtung durch Maskierungstechniken von der Beschichtung ausgenommen werden. Dies erschwert jedoch die Herstellung der Scheibe.

Das europäische Patent EP 2 639 032 B1 offenbart eine Low-E-Beschichtung mit einer Deckschicht aus Siliziumnitrid (Si₃N₄), welche das direkte Aufbringen eines Befestigungsoder Dichtelements ermöglicht. Die Low-E-Beschichtung enthält eine funktionelle Schicht auf Basis von beispielsweise Niob oder Silber, typische Materialien für Low-E-Beschichtungen, wie beispielsweise aus US 20110146172 A1, EP 1 218 307 B1, EP 2 247 549 A2, EP 877 006 B1, EP 1 047 644 B1 und EP 1 917 222 B1 bekannt ist. Diese Low-E-Beschichtungen sind mit der Si₃N₄-Deckschicht kompatibel.

Es sind aber auch Low-E-Beschichtungen auf Basis von transparenten leitfähigen Oxiden *(transparent conductive oxides,* TCO) bekannt, beispielsweise aus WO 2013/131667 A1. Gegenüber Niob-basierten Low-E-Beschichtungen haben diese den Vorteil, dass sie transparent sind und daher auf zur Durchsicht bestimmten Fensterscheiben eingesetzt werden können. Gegenüber Silber-basierten Low-E-Beschichtungen haben sie den Vorteil, dass sie korrosionsbeständig sind und daher auf einer atmosphärischen Einflüssen ausgesetzten Oberfläche der Scheibe eingesetzt werden können. TCO-basierte Low-E-Beschichtungen sind allerdings nicht mit der in EP 2 639 032 B1 vorgeschlagenen Si₃N₄-Deckschicht kompatibel, da diese aufgrund des Brechungsindex-Unterschieds zur TCO-Schicht zu einer zu geringen Entspiegelung der Beschichtung führt, so dass der Einsatz auf transparenten Scheiben nur mit großen Einbußen im Hinblick auf die optische Qualität möglich ist.

EP0576179A1 offenbart eine Scheibe mit einem opaken Abdeckdruck und einem darauf über einen Primer angebrachten Befestigungs- oder Dichtelement. Der Abdeckdruck ist direkt auf der Scheibenoberfläche aufgebracht.

US6309755B1 offenbart eine polymere Scheibe mit einem Abdeckdruck, der gleichzeitig als haftvermittelnder Primer fungiert und auf dem ein Befestigungs- oder Dichtelement angebracht ist. Der Abdeckdruck ist wiederum direkt auf der Scheibenoberfläche aufgebracht.

DE202013006875U1 offenbart eine Glasscheibe mit einer elektrisch leitfähigen Beschichtung, welche als Elektrode zur Steuerung einer flüssigkristallvermittelten variablen Streuung dient. Die Beschichtung weist eine leitfähige TCO-Schicht auf und eine oberste Schicht aus Siliziumoxid. Auf der Beschichtung ist eine Klebstoffabdichtung angeordnet.

US2014154434A1 offenbart eine Kühlschranktür, umfassend eine Glasscheibe mit einer Beschichtung, welche eine TCO-Schicht auf und eine oberste Schicht aus Siliziumoxid. Die Glasscheibe ist mit einer weiteren Glasscheibe über einen Abstandshalter zu einer Isolierglasverbunden, wobei der Abstandshalter aus einem Polymer gefertigt sein kann und direkt auf der Beschichtung angeordnet ist.

TW201342141A offenbart eine Scheibe mit einem polymeren Substrat, einem darauf aufgetragenen Primer, einer darauf gebildeten Schicht aus Siliziumoxid und einer darauf gebildeten TCO-Schicht.

Der vorliegenden Erfindung liegt die Aufgabe zugrunde, eine verbesserte Scheibe mit einer TCO-basierten Low-E-Beschichtung bereitzustellen, wobei ein Befestigungs- oder Dichtungselement auf der Low-E-Beschichtung angebracht werden kann, sowie ein Verfahren zu deren Herstellung.

Die Aufgabe der vorliegenden Erfindung wird erfindungsgemäß durch eine Scheibe mit Wärmestrahlung reflektierender Beschichtung gemäß Anspruch 1 gelöst. Bevorzugte Ausführungen gehen aus den Unteransprüchen hervor.

Die erfindungsgemäße Scheibe ist zur Abtrennung eines Innenraums von einer äußeren Umgebung vorgesehen. Dazu wird die Scheibe bevorzugt in eine Öffnung, insbesondere einer Fensteröffnung, eingesetzt. Diejenige Oberfläche der Scheibe beziehungsweise ihres Substrats, die dafür vorgesehen ist, in Einbaulage dem Innenraum zugewandt zu sein, wird im Sinne der Erfindung als innenraumseitige Oberfläche bezeichnet.

Die erfindungsgemäße Scheibe ist insbesondere eine Fensterscheibe. In einer bevorzugten Ausgestaltung ist die Scheibe eine Fahrzeugscheibe, insbesondere Kraftfahrzeugscheibe, beispielsweise die Scheibe eines Personenkraftwagens, Lastkraftwagens und Zugs. Bei solchen Scheiben sind polymere Befestigungs- oder Dichtelemente weit verbreitet. Die Scheibe kann beispielsweise eine Dachscheibe, Windschutzscheibe, Seitenscheibe oder Rückscheibe sein. In einer besonders bevorzugten Ausgestaltung der Erfindung ist die Scheibe eine Dachscheibe, Windschutzscheibe oder vordere Seitenscheibe, weil für diese Anwendung transparente Beschichtungen benötigt werden, was durch die erfindungsgemäße TCO-basierte Beschichtung gewährleistet wird. Die Erfindung ist aber gleichermaßen im Baubereich anwendbar, so dass die erfindungsgemäße Scheibe auch eine Architekturverglasung sein kann, z.B. eine Mehrfachverglasung.

Die erfindungsgemäße Scheibe umfasst mindestens ein Substrat, eine Wärmestrahlung reflektierende Beschichtung auf der innenraumseitigen Oberfläche des Substrats und ein polymeres, insbesondere elastomeres Befestigungs- oder Dichtelement auf bzw. über (oberhalb) der Wärmestrahlung reflektierenden Beschichtung. Erfindungsgemäß befindet sich die Wärmestrahlung reflektierende Beschichtung zwischen der innenraumseitigen Oberfläche des Substrats und dem Befestigungs- oder Dichtelement. Das Befestigungsoder Dichtelement hat demnach einen größeren Abstand von der innenraumseitigen Oberfläche des Substrats als die Wärmestrahlung reflektierende Beschichtung. Erfindungsgemäß ist das Befestigungs- oder Dichtelement nicht in direktem Berührungskontakt mit der Wärmestrahlung reflektierenden Beschichtung auf bzw. über der Wärmestrahlung reflektierenden Beschichtung angeordnet, so dass sich zwischen der Wärmestrahlung reflektierenden Beschichtung und dem Befestigungs- oder Dichtelement ein weiterer Bestandteil der Scheibe befindet, nämlich ein opaker Abdeckdruck und optional ein Primer. Der opake Abdeckdruck ist erfindungsgemäß direkt auf der Wärmestrahlung reflektierenden Beschichtung aufgebracht.

Die Wärmestrahlung reflektierenden Beschichtung auf der innenseitigen Oberfläche kann auch als Low-E-Beschichtung bezeichnet werden - sie verringert im Sommer die Aussendung von Wärmestrahlung der Scheibe in den Innenraum und im Winter die Abstrahlung von Wärme in die äußere Umgebung. Die Wärmestrahlung reflektierende Beschichtung weist mindestens eine funktionelle Schicht enthaltend ein transparentes leitfähiges Oxid (TCO) auf. Typischerweise weist die Beschichtung neben der funktionellen Schicht eine oder mehrere dielektrische Schichten auf, die der Entspiegelung oder als Barriereschicht dienen. Erfindungsgemäß enthält die oberste Schicht, auf der das Befestigungs- oder Dichtelement angebracht ist, Siliziumdioxid (SiO₂). Die oberste Schicht im Sinne der Erfindung ist diejenige Schicht des Schichtstapels, welche den größten Abstand zum Substrat aufweist.

Die Erfinder haben erkannt, dass eine Schicht basierend auf SiO₂ einerseits mit einer TCO-basierten Low-E-Beschichtung kompatibel ist, weil sie einen geeigneten Brechungsindex aufweist und eine ausreichende Entspiegelung gewährleistet. Die erfindungsgemäße Beschichtung setzt die Transparenz der Scheibe also nicht durch Reflexionseffekte unerwünscht herab. Das ist ein großer Vorteil der vorliegenden Erfindung.

Die erfindungsgemäße Beschichtung weist einen weiteren großen Vorteil auf: sie ist bedruckbar. Die Scheibe kann samt der Beschichtung problemlos mit einem im Fahrzeugbau üblichen opaken Abdeckdruck versehen werden. Ein solcher Abdeckdruck besteht typischerweise aus einer Emaille, welche auf die Scheibe aufgebracht (beispielsweise im Siebdruckverfahren) und eingebrannt wird. Erfindungsgemäß ist die Scheibe mit einem solchen opaken Abdeckdruck versehen, welcher zwischen der Wärmestrahlung reflektierenden Beschichtung und dem Befestigungs- oder Dichtelement angeordnet ist. Die Erfinder haben erkannt, dass ein solcher Abdeckdruck direkt auf die erfindungsgemäße Beschichtung mit der obersten Schicht basierend auf SiO₂ aufgebracht werden kann. Andere Deckschichten wie beispielsweise die in EP 2 639 032 B1 vorgeschlagene Si₃N₄-Deckschicht führen beim Bedrucken zu Problemen wie beispielsweise eine Blasenbildung oder eine mangelhafte Haftung der Druckfarbe. Das Befestigungs- oder Dichtelement haftet auf dem Abdeckdruck problemlos.

Die Erfindung ermöglicht also die Herstellung von Scheiben ohne die Beschichtung bereichsweise zum Anbringen des Befestigungs- oder Dichtelements entfernen zu müssen, nämlich durch Aufbringen eines Abdeckdrucks auf die Beschichtung, auf welchem wiederum das Befestigungs- oder Dichtelement angebracht wird.

Das Befestigungs- oder Dichtelement ist bevorzugt extrudiert. Es ist bevorzugt direkt an die Scheibe extrudiert, kann aber auch nach der Extrusion gehärtet und anschließend an der Scheibe befestigt sein.

Geeignete polymere Befestigungs- oder Dichtelemente sind dem Fachmann an sich bekannt. Das bevorzugt extrudierte Befestigungs- oder Dichtelement kann insbesondere sein oder umfassen:
- eine Dichtlippe
   Dichtlippen sind insbesondere im Fahrzeugbereich üblich. Sie sind im Randbereich der Scheibe entlang einer oder mehrerer Seitenkanten angeordnet und ragen über die Seitenkante hinaus. Dichtlippen verschließen den Spalt zwischen der Scheibe und der Fahrzeugkarossiere, wodurch Fahrtgeräusche reduziert werden. Dichtlippen sind aber
   auch für andere Anwendungen denkbar.
- eine Kleberaupe zur Befestigung der Scheibe
   Die Kleberaupe ist ein Streifen eines Klebstoffs, welcher im Randbereich im Wesentlichen umlaufend auf eine Oberfläche der Scheibe aufgebracht ist und das Einkleben der Scheibe in eine Fensteröffnung ermöglicht. Solche Kleberaupen sind ebenfalls insbesondere im Fahrzeugbereich üblich, aber auch bei anderen Scheiben
   anwendbar.
- Klebstoff zur Befestigung eines Anbauteils an der Scheibe
   Auch Anbauteile sind insbesondere im Fahrzeugbereich üblich, beispielsweise Rückspiegel, Sensoren oder Kameras, Griffe, Einkapselungen.

In einer bevorzugten Ausgestaltung enthält das Befestigungs- oder Dichtelement Polyurethan, Polyolefin, Polysulfid, Polyepoxid, Kautschuk wie Naturkautschuk, Nitrilkautschuk (NBR), Styrol-Butadien-Kautschuk, Butadien-Acrylnitril-Kautschuk, Ethylen-Propylen-Dien-Kautschuk, Silikonkautschuk wie RTV-(raumtemperaturvernetzenden) Silikonkautschuk, HTV-(hochtemperturvernetzenden) Silikonkautschuk, peroxidischvernetzten Silikonkautschuk oder additionsvernetzten Silikonkautschuk, Polyacrylat, Styrol/Butadien-Blockcopolymer (SBS), Ethylen-Propylen-Dien-Kautschuk (EPDM) und/oder ein Thermoplastisches Elastomer (TPE). Diese Materialien sind insbesondere für Dichtlippen oder ähnliche nicht-adhäsive Anwendungen geeignet.

In einer weiteren bevorzugten Ausgestaltung enthält das Befestigungs- oder Dichtelement heiß-, feuchtigkeits- oder UV-härtende Polymere, insbesondere feuchtigkeitsreaktive Schmelzklebstoffe, wie Polyurethan-Präpolymere, Polyester, Polyolefine, Polyamide oder Gemische oder Copolymere davon, oder heißhärtende Klebstoffe, wie Polyurethane, Silikone, Polyacrylate und Polyepoxide (Epoxidharze) oder Gemische davon. Diese Materialien sind insbesondere für adhäsive Anwendungen, wie Kleberaupen oder Klebstoff für Anbauteile, geeignet.

In einer bevorzugten Ausgestaltung ist unterhalb des Befestigungs- oder Dichtelements, also zwischen dem opaken Abdeckdruck und dem Befestigungs- oder Dichtelement, ein Primer aufgebracht. So wird die Haftung des Befestigungs- oder Dichtelements verbessert. Besonders gute Ergebnisse werden erzielt, wenn der Primer Polyisocyanat, reaktives Silan, Methacrylat und/oder Polyurethan enthält.

Das Substrat enthält oder besteht bevorzugt aus Glas, insbesondere Kalk-Natron-Glas, das als Fensterglas üblich ist. Das Substrat kann aber auch andere Glassorten enthalten, wie Quarzglas, Borsilikatglas oder Aluminosilikatglas, oder auch Kunststoffe, insbesondere starre, klare Kunststoffe, bevorzugt Polycarbonat (PC) oder Polymethylmethacrylat (PMMA). Das Substrat kann klar und transparent, aber auch getönt oder gefärbt sein. Das Substrat kann plan (wie im Architekturbereich oder bei großflächigen Verglasungen von Bussen, Zügen oder Traktoren üblich) oder auch in einer oder mehreren Richtungen des Raums gebogen sein (wie im Kraftfahrzeugbereich üblich, insbesondere bei PKWs).

Die Dicke des Substrats kann breit variieren und so hervorragend den Erfordernissen im Einzelfall angepasst werden. Vorzugsweise werden Scheiben mit den Standardstärken von 1 mm bis 10 mm und bevorzugt von 1,4 mm bis 6 mm verwendet. Die Größe des Substrats kann breit variieren und richtet sich nach der erfindungsgemäßen Verwendung. Das Substrat weist beispielsweise im Fahrzeugbau und Architekturbereich übliche Flächen von 200 cm² bis zu 20 m² auf.

In einer bevorzugten Ausgestaltung ist das Substrat Teil einer Verbundscheibe. Die Verbundscheibe umfasst eine Außenscheibe und eine Innenscheibe, die über eine thermoplastische Zwischenschicht miteinander verbunden sind. Als Außenscheibe wird im Sinne der Erfindung diejenige Scheibe bezeichnet, die dafür vorgesehen ist, in Einbaulage der äußeren Umgebung zugewandt zu sein. Als Innenscheibe wird im Sinne der Erfindung diejenige Scheibe bezeichnet, die dafür vorgesehen ist, dem Innenraum zugewandt zu sein. Das Substrat ist die Innenscheibe des Verbundglases. Die innenraumseitige Oberfläche des Substrats ist daher auch die innenraumseitige Oberfläche der Verbundscheibe. Die Außenscheibe besteht bevorzugt aus Glas, insbesondere Kalk-Natron-Glas, und weist beispielsweise eine Dicke von 1 mm bis 10 mm, bevorzugt von 1,4 mm bis 6 mm auf. Die thermoplastische Zwischenschicht ist typischerweise durch eine thermoplastische Folie enthaltend insbesondere Polyvinylbutyral (PVB), Ethylenvinylacetat (EVA) oder Polyurethan (PU) ausgebildet. Typische Dicken der Zwischenschicht betragen von 0,3 mm bis 1,0 mm, beispielsweise 0,76 mm. Verbundscheiben sind insbesondere als Fahrzeugscheiben gebräuchlich, typischerweise als Windschutzscheibe oder Dachscheiben, zunehmend aber auch als Heckscheiben oder Seitenscheiben.

Das Substrat kann auch über einen Abstandshalter mit einer zweiten Scheibe zu einer Isolierverglasung verbunden sein, wobei das Substrat wahlweise als Außenscheibe oder Innenscheibe eingesetzt werden kann.

Die funktionelle Schicht weist reflektierende Eigenschaften gegenüber Wärmestrahlung, insbesondere Infrarotstrahlung auf und enthält erfindungsgemäß zumindest ein TCO. Der Vorteil ist die hohe optische Transparenz und chemische Beständigkeit dieser Materialien. Die funktionelle Schicht enthält bevorzugt zumindest Indium-Zinn-Oxid (ITO), Fluor-dotiertes Zinnoxid (SnO₂:F) oder Antimon-dotiertes Zinnoxid (SnO₂:Sb), insbesondere ITO. Damit werden besonders gute Ergebnisse hinsichtlich der Emissivität und der Beschichtungseigenschaften erreicht. Der Brechungsindex des Materials der funktionellen Schicht beträgt bevorzugt von 1,7 bis 2,5 (bei einer Wellenlänge von 550 nm gemessen). Die funktionelle Schicht enthält bevorzugt zumindest 90 Gew.-% des TCOs, besonders bevorzugt zumindest 95 Gew.-%, ganz besonders bevorzugt zumindest 99 Gew.-%. Die funktionelle Schicht kann aus dem TCO bestehen oder auch Dotierungen aufweisen.

Die Emissivität der erfindungsgemäßen Scheibe kann durch die Dicke der funktionellen Schicht beeinflusst werden. Die Dicke der funktionellen Schicht beträgt bevorzugt von 40 nm bis 200 nm, besonders bevorzugt von 70 nm bis 150 nm und ganz besonders bevorzugt von 100 nm bis 130 nm, beispielsweise etwa 120 nm. In diesem Bereich ist die funktionelle Schicht einerseits ausreichend dick, um eine vorteilhafte Emissivität zu gewährleisten, und andererseits ausreichend dünn, um eine mechanische Transformation wie Biegen oder Vorspannen ohne Beschädigung zu überstehen.

Die funktionelle Schicht kann aber auch andere transparente, elektrisch leitfähige Oxide enthalten, beispielsweise Indium-Zink-Mischoxid (IZO), Gallium-dotiertes oder Aluminiumdotiertes Zinkoxid, Niobium-dotiertes Titanoxid, Cadmiumstannat oder Zinkstannat.

Die oberste Schicht der erfindungsgemäßen Beschichtung enthält SiO₂. Dies hat den Vorteil, dass die oberste Schicht aufgrund ihres Brechungsindex als Antireflexionsschicht fungiert. Die Transparenz des beschichteten Substrats wird dadurch erhöht, so dass die Scheibe auch als Fensterscheibe geeignet ist. Als Antireflexionsschichten für TCO-basierte funktionelle Schichten kommen prinzipiell auch andere oxidische Materialien in Betracht, beispielsweise Titanoxid (TiO₂) oder Zinkzinnoxid (ZnSnO). Die erfindungsgemäße Auswahl des SiO₂ gewährleistet außer einem geeigneten Brechungsindex n < 1,7 überraschend auch die erfindungsgemäßen Hafteigenschaften bezüglich des polymeren Befestigungs- oder Dichtelements und des opaken Abdeckdrucks.

Die oberste Schicht enthält bevorzugt zumindest 90 Gew.-% des SiO₂, besonders bevorzugt zumindest 92 Gew.-%. Die funktionelle Schicht kann aus reinem SiO₂ bestehen oder auch Dotierungen aufweisen, insbesondere Aluminium (SiO₂:Al), Bor (SiO₂:B), Zinn (SiO₂:Sn), Titan (SiO₂:Ti), Zirkonium (SiO₂:Zr) oder Hafnium (SiO₂:Hf).

Die oberste Schicht weist bevorzugt eine Dicke von 20 nm bis 150 nm auf, besonders bevorzugt von 40 nm bis 100 nm. Das ist besonders vorteilhaft im Hinblick auf die entspiegelnden Eigenschaften und die Hafteigenschaften.

In einer vorteilhaften Ausgestaltung ist unterhalb der funktionellen Schicht eine Haftschicht angeordnet. Die Haftschicht führt zu einer dauerhaft stabilen Haftung der oberhalb der Haftschicht abgeschiedenen Schichten auf dem Substrat. Die Haftschicht verhindert weiter die Anreicherung von aus dem Substrat diffundierenden Ionen im Grenzbereich zur funktionellen Schicht, insbesondere von Natriumionen, falls das Substrat aus Glas besteht. Solche Ionen können zur Korrosion und zu einer geringen Haftung der funktionellen Schicht führen. Die Haftschicht ist daher besonders vorteilhaft im Hinblick auf die Stabilität der funktionellen Schicht.

Das Material der Haftschicht weist bevorzugt einen Brechungsindex im Bereich des Brechungsindexes des Substrats auf. Das Material der Haftschicht weist bevorzugt einen geringeren Brechungsindex als das Material der funktionellen Schicht auf. Die Haftschicht enthält bevorzugt zumindest ein Oxid, besonders bevorzugt TiO₂, Al₂O₃ und/oder ZnSnOₓ, ganz besonders bevorzugt SiO₂. Die Haftschicht weist bevorzugt eine Dicke von 10 nm bis 150 nm auf, besonders bevorzugt von 15 nm bis 50 nm, beispielsweise etwa 30 nm. Das ist besonders vorteilhaft im Hinblick auf die Haftung der erfindungsgemäßen Beschichtung und die Vermeidung der Diffusion von Ionen vom Substrat in die funktionelle Schicht.

In einer vorteilhaften Ausgestaltung ist zwischen der funktionellen Schicht und der obersten Schicht eine Barriereschicht angeordnet, welche dazu geeignet ist, die unkontrollierte Oxidation der funktionellen Schicht während eines Transformationsprozesses der Scheibe (beispielsweise Biegen oder Tempern) zu verhindern oder zu reduzieren. Die Barriereschicht enthält bevorzugt Siliziumnitrid (Si₃N₄), Zirkonnitrid (Zr₃N₄) oder Aluminiumnitrid (AIN), besonders bevorzugt Siliziumnitrid (Si₃N₄). Die Dicke der Barriereschicht beträgt bevorzugt von 5 nm bis 30 nm, besonders bevorzugt 10 nm bis 20 nm. Damit werden besonders gute Ergebnisse erreicht. Die Barriereschicht kann Dotierungen aufweisen, beispielsweise Aluminium, Zirkonium, Hafnium, Titan oder Bor.

Die innenraumseitige Emissivität der erfindungsgemäßen Scheibe beträgt bevorzugt kleiner oder gleich 30%, besonders bevorzugt kleiner oder gleich 25%. Mit innenraumseitiger Emissivität wird dabei das Maß bezeichnet, welches angibt, wie viel Wärmestrahlung die Scheibe in Einbaulage im Vergleich zu einem idealen Wärmestrahler (einem schwarzen Körper) in einen Innenraum, beispielsweise eines Gebäudes oder eines Fahrzeugs abgibt. Unter Emissivität wird im Sinne der Erfindung der normale Emissionsgrad bei 283 K nach der Norm EN 12898 verstanden.

Die Erfindung umfasst weiter ein Verfahren zur Herstellung einer Scheibe mit einer Wärmestrahlung reflektierenden Beschichtung und einem polymeren Befestigungs- oder Dichtungselement, wobei:
(a) eine Wärmestrahlung reflektierende Beschichtung auf die innenraumseitige Oberfläche eines Substrats aufgebracht wird, wobei die besagte Beschichtung mindestens eine funktionelle Schicht enthaltend ein transparentes leitfähiges Oxid (TCO) aufweist und eine oberste Schicht enthaltend Siliziumdioxid (SiO₂), und
(b) ein opaker Abdeckdruck direkt auf die Wärmestrahlung reflektierende Beschichtung aufgedruckt wird und
(c) ein polymeres Befestigungs- oder Dichtungselement auf der besagten Beschichtung angebracht wird. Die Wärmestrahlung reflektierende Beschichtung samt der obersten Schicht enthaltend SiO₂ wird vor dem Anbringen des Befestigungs- oder Dichtungselements nicht abgetragen.

Das Aufbringen der Beschichtung in Verfahrensschritt (a) erfolgt durch an sich bekannte Verfahren, bevorzugt durch magnetfeldunterstützte Kathodenzerstäubung. Das ist besonders vorteilhaft im Hinblick auf eine einfache, schnelle, kostengünstige und gleichmäßige Beschichtung des Substrats. Die Kathodenzerstäubung erfolgt in einer Schutzgasatmosphäre, beispielsweise aus Argon, beziehungsweise in einer Reaktivgasatmosphäre, beispielsweise durch Zugabe von Sauerstoff oder Stickstoff. Die einzelnen Schichten können aber auch durch andere, dem Fachmann bekannte Verfahren aufgebracht werden, beispielsweise durch Aufdampfen oder chemische Gasphasenabscheidung (chemical vapour deposition, CVD), durch plasmagestützte Gasphasenabscheidung (PECVD) oder durch nasschemische Verfahren.

Die Scheibe kann nach dem Aufbringen der Wärmestrahlung reflektierenden Beschichtung einer Temperaturbehandlung unterzogen werden. Dabei wird das Substrat mit der erfindungsgemäßen Beschichtung auf eine Temperatur von mindestens 200°C, besonders bevorzugt mindestens 300°C erhitzt. Durch die Temperaturbehandlung wird insbesondere die Kristallinität der funktionellen Schicht verbessert. Dadurch werden die Transmission von sichtbarem Licht und die reflektierenden Eigenschaften gegenüber Wärmestrahlung deutlich verbessert. Die Temperaturbehandlung kann auch im Rahmen eines Biegeprozesses erfolgen, falls die Scheibe gebogen werden soll. Typische Biegetemperaturen betragen von 500°C bis 700°C. Eine Temperaturbehandlung kann alternativ auch mittels Laserstrahlung durchgeführt werden.

In einer vorteilhaften Ausführung wird zwischen den Verfahrensschritten (b) und (c) ein Primer auf den opaken Abdeckdruck aufgebracht, wodurch die Haftung des Befestigungs- oder Dichtungselements weiter verbessert werden kann. Der Primer wird bevorzugt in Form einer Lösung mit einem Filz oder Schwamm auf der zu beklebenden Oberfläche aufgetragen. Die Temperatur beträgt bevorzugt zwischen 10 °C und 40 °C. Die relative Luftfeuchtigkeit beträgt bevorzugt zwischen 20 % und 80 %. Die Ablüftzeit beträgt bevorzugt 30 s bis 3 Tage. Die Größe und Fläche des aufgetragenen Primers richtet sich nach der Größe des später zu befestigenden Befestigungs- oder Dichtelements. Der Primer wird beispielsweise auf einer Fläche von 2 cm² bis 100 cm² aufgetragen.

In einer bevorzugten Ausführung wird die besagte Beschichtung zwischen den Verfahrensschritten (a) und (b) mit einer Reinigungslösung behandelt. Die Reinigungslösung enthält bevorzugt ein Silan, ein Tensid, einen Alkohol, ein Keton oder Gemische davon.

In einer besonders vorteilhaften Ausführung wird die Beschichtung mit einer Aktivreinigung behandelt. Bei einer Aktivreinigung wird die Oberfläche sowohl gereinigt als auch chemisch aktiviert. Die Aktivreinigung kann sowohl in separaten Reinigungs- und Aktivierungsschritten als auch in einem Schritt erfolgen. Im Reinigungsschritt werden anhaftende Verschmutzungen und produktionsbedingte Rückstände entfernt. Im Aktivierungsschritt wird die Oberfläche mit oberflächenaktiven Substanzen modifiziert. Dies kann beispielsweise durch die Addition reaktiver Gruppen erfolgen. Beispiele für reaktive Gruppen für Glassubstrate sind Silane, insbesondere organische

Silanderivate. Silane, die über geeignete Abgangsgruppen wie Alkohole verfügen, können eine chemische Bindung mit der freien Si-O-Oberfläche der obersten Schicht eingehen. Beispiele für derartige Silane sind Alkyltrimethoxysilane und Alkyltriethoxysilane, beispielsweise Isooctyltrimethoxysilan (C11H2603Si/CAS no. [Chemical Abstracts Number] 34396-03-7), Octyltrimethoxysilan (C11H2603Si/CAS no. 3069-40-7), Octadecyltrimethoxysilan (C21H46O3Si/ CAS no. 3069-42-9), Octadecyltriethoxysilan (C24H52O3Si/ CAS no. 7399-00-0) und/oder Gemische davon. Die Hydrophobizität einer beschichteten Oberfläche kann auch durch Addition hydrophober oder hydrophiler Gruppen eingestellt und verändert werden. Die Addition von Silanen mit einer langen Alkankette, beispielsweise Octadecyltrimethoxysilan (C21H46O3Si/ CAS no. 3069-42-9), erzeugt eine hydrophobe Oberfläche. Eine hydrophile Oberfläche wird durch die Addition polarer Silane, beispielsweise 3-Aminopropyltrimethoxysilan (C6H17NO3Si/CAS no. 13822-56-5) oder N-(Hydroxyethyl)-N-methylaminopropyltrimethoxysilan (C9H23NO4Si/CAS no. 330457-46-0) erzeugt.

Die Aktivreinigung erfolgt bevorzugt in einen Schritt durch Auftragen einer Lösung aus Reinigungsmittel und oberflächenmodifizierender Substanz. Die Lösung kann nach kurzer Einwirkzeit mit einem Filz oder Schwamm abgewischt werden.

Die Beschichtung kann mit einem Plasma aktiviert und gereinigt werden. Unter Plasma wird ein teilweise ionisiertes Gas verstanden. Auf der Oberfläche werden durch das ionisierte Gas Molekülbruchstücke erzeugt, welche eine höhere Adhäsionsfähigkeit der Oberfläche erzeugen.

Das Anbringen des Befestigungs- oder Dichtelements auf dem Abdeckdruck erfolgt bevorzugt durch direktes Anextrudieren. Dabei wird eine Extrusionsdüse über die Scheibe geführt. Das extrudierte Material wird mit der Extrusionsdüse direkt auf die Scheibe aufgebracht und härtet dort aus. Verfahren zum direkten Anextrudieren von Befestigungs- oder Dichtelementen sind dem Fachmann an sich bekannt.

Alternativ kann das Befestigungs- oder Dichtelement aber auch zunächst extrudiert und ausgehärtet werden und anschließend auf dem Abdeckdruck angebracht werden, beispielsweise mittels eines Klebstoffs oder eines doppelseitigen Klebebandes.

Die Bildung der Dichtung oder eines Profilstranges erfolgt entweder auf molekularer Ebene, beispielsweise durch Lebende Polymerisation, Kettenpolymerisation, Polykondensation, Polyaddition oder bei Thermoplastischen Elastomeren durch Erwärmen und anschließendes Abkühlen. Zur Verbesserung der elastischen Eigenschaften kann sich noch eine Polymervernetzung, beispielsweise durch Temperaturerhöhung, Luftfeuchtigkeit, Sauerstoffzugabe anschließen.

Enthält das Befestigungs- oder Dichtelement feuchtigkeitsreaktive Schmelzklebstoffe, so erfolgt das Auftragen bevorzugt bei Temperaturen von 80°C bis 200°C. Der feuchtigkeitsreaktive Schmelzklebstoff kann über eine entsprechend temperierte Düse aufgebracht werden.

Heißhärtende Klebstoffe enthalten bei Raumtemperatur (25 °C) fließfähige organische und/oder anorganische Polymere sowie Copolymere und Gemische davon. Enthält das Befestigungs- oder Dichtelement heißhärtende Klebstoffe, so sind zur Vernetzung der organischen und/oder anorganischen Polymere im Vergleich zur Raumtemperatur erhöhte Temperaturen im Bereich von 50°C bis 300°C notwendig.

Die Zeitdauer für das Aushärten der Klebung hängt vom verwendeten Klebstoff ab. Die Klebung weist bereits nach der Wärmebehandlung eine hohe Verarbeitungsfestigkeit auf, sodass die verbundenen Teile auch vor Erreichen der Endfestigkeit verpackt werden können. Die Erfindung umfasst weiter die Verwendung einer erfindungsgemäßen Scheibe als Fahrzeugscheibe oder Bestandteil einer Fahrzeugscheibe, bevorzugt als Kraftfahrzeug-Dachscheibe oder als Bestandteil einer Kraftfahrzeug-Dachscheibe, insbesondere für einen Personenkraftwagen (PKW). Die Scheibe kann aber auch als Windschutzscheibe, Heckscheibe oder Seitenscheibe verwendet werden.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf die innenraumseitige Oberfläche einer Scheibe mit Wärmestrahlung reflektierender Beschichtung (nicht beansprucht),
- Fig. 2: einen Schnitt entlang A-A' durch die Scheibe gemäß Figur 1,
- Fig. 3: eine vergrößerte Darstellung des Ausschnitts Z aus Figur 2,
- Fig. 4: eine vergrößerte Darstellung des Ausschnitts Z einer erfindungsgemäßen Ausgestaltung der Scheibe,
- Fig. 5: ein Querschnitt durch ein Substrat mit einer Ausgestaltung der erfindungsgemäßen Wärmestrahlung reflektierenden Beschichtung,
- Fig. 6: ein detailliertes Flussdiagramm zweier Verfahren, wobei eines erfindungsgemäß ist, und
- Fig. 7: ein Diagramm des Reflexionsgrades von beschichteten Scheiben mit unterschiedlichen funktionellen Schichten und unterschiedlichen obersten Schichten,

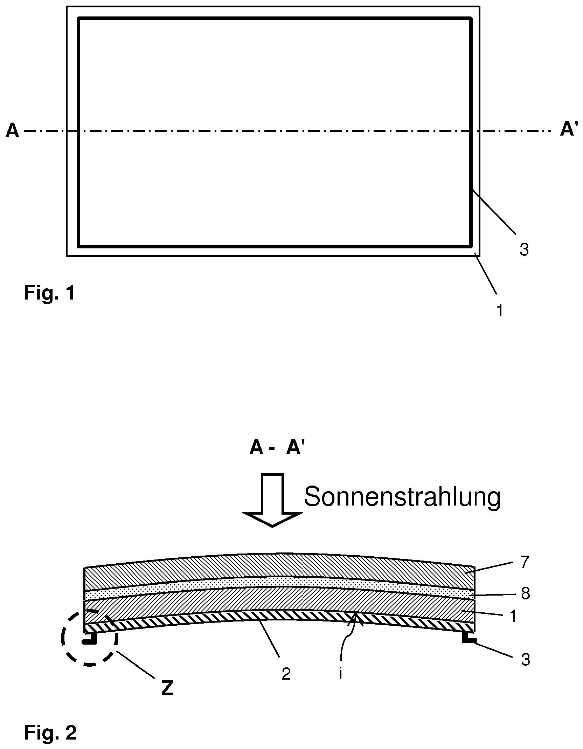

Fig. 1, Fig. 2 und Fig. 3 zeigen je ein Detail einer Scheibe. Die Scheibe ist die Dachscheibe eines Kraftfahrzeugs und ist als laminierte Scheibe (Verbundscheibe) ausgebildet. Sie besteht aus einem Substrat 1, welches als Innenscheibe fungiert, und einer Außenscheibe 7, welche über eine thermoplastische Zwischenschicht 8 miteinander verbunden sind. Die Außenscheibe 7 und das Substrat 1 bestehen aus Kalk-Natron-Glas und weisen eine Dicke von jeweils 2,1 mm auf. Die thermoplastische Zwischenschicht 8 ist aus einer 0,76 mm dicken Folie aus PVB ausgebildet. Die Dachscheibe weist, wie im Kfz-Bereich üblich, eine Krümmung auf.

Die von der Außenscheibe 7 abgewandte Oberfläche des Substrats 1 ist die innenraumseitige Oberfläche i des Substrats 1 und der Dachscheibe. Sie ist dafür vorgesehen, in Einbaulage den Fahrzeuginnenraum zugewandt zu sein. Die innenraumseitige Oberfläche i ist vollflächig mit einer Wärmestrahlung reflektierenden Beschichtung 2 versehen. Die Beschichtung 2 enthält eine funktionelle Schicht auf Basis von Indium-Zinn-Oxid (ITO) und weist als oberste Schicht eine Schicht auf Basis von SiO₂ auf. Durch die Anordnung auf der innenraumseitigen Oberfläche i wirkt die Beschichtung 2 als sogenannte LowE-Beschichtung.

Die oberste Schicht ermöglicht ein direktes Anbringen eines polymeren Befestigungs- oder Dichtelements 3. Das Entfernen der Beschichtung 2 im Bereich des Befestigungs- oder Dichtelements 3 vor dessen Anbringung kann daher vorteilhafterweise entfallen. In der beispielhaften Ausgestaltung ist die Oberfläche i mit der Beschichtung 2 mit einem Primer 4 vorbehandelt und das Befestigungs- oder Dichtelement 3 als darauf anextrudierte Dichtlippe ausgebildet. Die Dichtlippe ist direkt an der Scheibenoberflläche ausgehärtet, und außer über den Primer über keine weitere Klebeschicht an der Scheibe angebracht. Die Dichtlippe ragt über die Seitenkante der Scheibe und verschließt nach dem Einbau in die Fahrzeugkarosserie den Spalt zwischen Scheibe und Karosserie, wodurch insbesondere Fahrtgeräusche vermindert werden können.

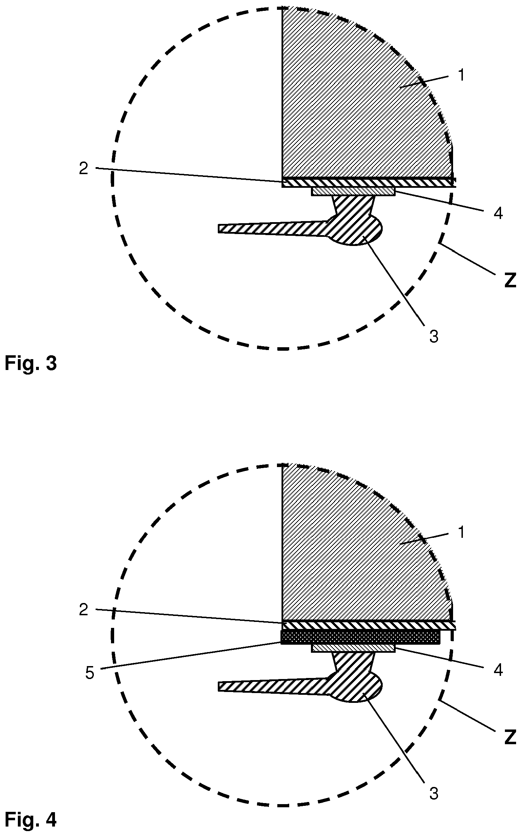

Fig. 4 zeigt ein Detail einer Ausgestaltung einer erfindungsgemäßen Scheibe. Das Befestigungs- oder Dichtelement 3 ist hierbei nicht direkt auf die Beschichtung 2 aufgebracht. Stattdessen ist auf der Beschichtung 2 ein opaker Abdeckdruck 5 aus einer schwarzen Emaille aufgebracht, wie es im Randbereich von Kfz-Scheiben üblich ist. Das Befestigungs- oder Dichtelement 3 ist wiederum über einen Primer 4 auf dem Abdeckdruck 5 aufgebracht. Der Vorteil liegt auch hier in der obersten Schicht auf Basis von SiO₂ begründet, welche das Bedrucken der Beschichtung 2 ermöglicht.

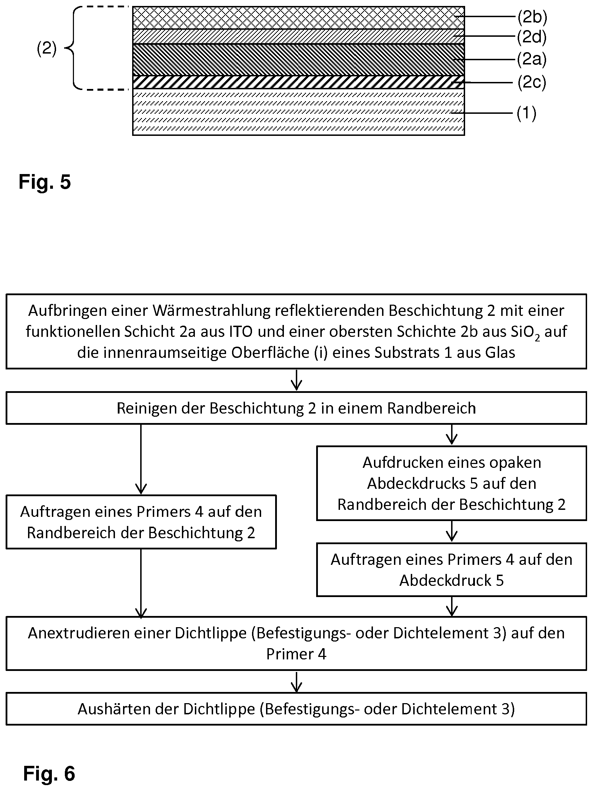

Fig. 5 zeigt ein Ausführungsbeispiel eines Substrats 1 mit einer erfindungsgemäßen Wärmestrahlung reflektierenden Beschichtung 2. Die Beschichtung 2 ist ein Stapel dünner Schichten, ausgehend vom Substrat 1 bestehend aus einer Haftschicht 2c, einer funktionellen Schicht 2a, einer Barriereschicht 2d und einer obersten Schicht 2b. Die Schichtfolge mit beispielhaften Materialien und Schichtdicken ist in Tabelle 1 dargestellt.

**Tabelle 1**

| Bezugszeichen | | Material | Dicke |
|---|---|---|---|
| 2b | 2 | SiO₂:Al | 70 nm |
| 2d | | Si₃N₄:Al | 10 nm |
| 2a | | ITO | 120 nm |
| 2c | | SiO₂:Al | 35 nm |
| 1 | | Glas | 2,1 mm |

Die Haftschicht 2c besteht aus SiO₂, welches mit Aluminium dotiert ist. Sie verbessert die Haftung der darüber aufgebrachten Schichten am Substrat 1. Die funktionelle Schicht 2a besteht aus ITO und weist die reflektierenden Eigenschaften gegenüber Wärmestrahlung auf. Die Barriereschicht 2d besteht aus Si₃N₄, welches mit Aluminium dotiert ist. Sie verhindert die Korrosion der funktionellen Schicht 2a während einer Temperaturbehandlung der beschichteten Scheibe, wie sie beispielsweise beim Biegen oder beim Laminieren der Scheibe auftritt. Die oberste Schicht 2b besteht wiederum aus SiO₂, welches mit Aluminium dotiert ist. Die oberste Schicht 2b wirkt einerseits als Antireflexionsschicht, welche die Transparenz der beschichteten Scheibe erhöht. Andererseits ermöglicht sie das direkte Anbringen eines polymeren Befestigungs- oder Dichtelements 3 oder eines opaken Abdeckdrucks 5.

Fig. 6 zeigt beispielhaft zwei Verfahren. Zwischen dem Reinigungsschritt und dem Extrusionsschritt sind zwei alternative Verfahrenswege aufgeführt, wobei der linke Weg (Auftragen eines Primers 4) nicht beansprucht wird und der rechte Weg (Aufdrucken eines Abdeckdrucks 5, Auftragen eines Primers 4) erfindungsgemäß ist.

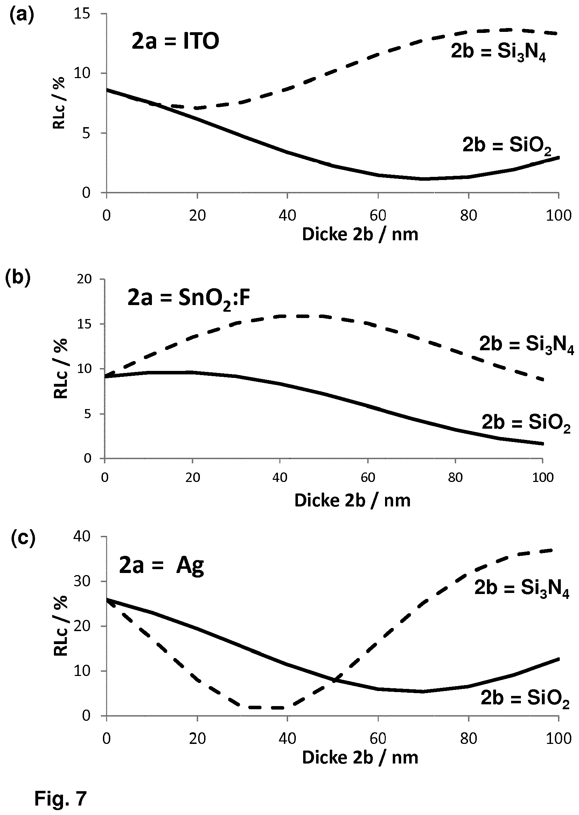

Fig. 7 zeigt Simulationen des Reflexionsgrades RLc von Wärmestrahlung reflektierenden Beschichtungen 2 in Abhängigkeit von der funktionellen Schicht 2a und der obersten Schicht 2b. Die Simulationen vergleichen die entspiegelnde Wirkung von obersten Schichten 2b aus Si₃N₄ und SiO₂. Funktionelle Schichten 2a auf Basis von Silber lassen sich wirkungsvoll durch oberste Schichten 2b auf Basis von Si₃N₄ bis zu einer Dicke von etwa 50 nm entspiegeln (Fig. 7c). Aus dem Stand der Technik ist bekannt, dass eine oberste Schicht auf Basis von Si₃N₄ das direkte Anbringen von polymeren Befestigungs- oder Dichtelementen 3 ermöglicht. Aus den Simulationen geht aber hervor, dass eine solche oberste Schicht 2b auf Basis von Si₃N₄ in Verbindung mit funktionellen Schichten 2a auf Basis von TCOs nicht zu einer wirkungsvollen Entspiegelung führt - hierfür sind die erfindungsgemäßen obersten Schichten 2b auf Basis von SiO₂ geeignet (Fig. 7a,b).

Beispiel 1 (nicht erfindungsgemäß) - Haftungseigenschaften Es wurden Testscheiben und Vergleichsscheiben hergestellt mit einer Wärmestrahlung reflektierenden Beschichtung 2 mit einer funktionellen Schicht 2a aus ITO und einer darauf angebrachten polymeren Dichtlippe als Dichtelement 3. Die Beschichtung 2 auf den Testscheiben unterschied sich von der Beschichtung 2 auf den Vergleichsscheiben lediglich durch das Material der obersten Schicht 2b: erfindungsgemäß wurde hier SiO₂ eingesetzt, bei den Vergleichsscheibe TiO₂. Die Scheiben mit dem Dichtelement 3 wurden durch Temperatur-, Feuchtigkeits- und Salzbehandlung künstlich gealtert. Anschließend wurde die Haftung des Dichtelements 3 mittels eines manuellen Abzugstests überprüft: das Dichtelement 3 wurde bis zum Substrat 1 durchschnitten und dann entlang seiner Ausbreitungsrichtung abgezogen. Anschließend wurde das Bruchbild visuell nach DIN EN ISO 10365 bewertet. Kohäsiver Bruch (Bruch innerhalb des Dichtelements 3) ist akzeptabel, während adhäsiver Bruch (Ablösung des gesamten Dichtelements 3 von der Beschichtung 2) nicht akzeptabel ist.

Die Ergebnisse sind in Tabelle 2 dargestellt. Es ist klar zu erkennen, dass die oberste Schicht 2b aus SiO₂ in allen Fällen zu einem guten Haftverhalten führt, während das bei den Vergleichsscheiben nur in einem Viertel der Fälle der Fall war.

**Tabelle 2**

| oberste Schicht 2b | kohäsiver Bruch (akzeptabel) | adhäsiver Bruch (nicht akzeptabel) |
|---|---|---|
| SiO₂ | 100% | 0% |
| TiO₂ | 25% | 75% |

Es sind also nicht alle als Antireflexionsschichten geeigneten obersten Schichten 2b zum direkten Aufbringen eines polymeren Dichtelements 3 geeignet. Dies wird ermöglicht durch die Auswahl der obersten Schicht 2b auf Basis von SiO₂.

### Beispiel 2 - Bedruckbarkeit

Es wurden erfindungsgemäße Testscheiben und Vergleichsscheiben hergestellt mit einer Wärmestrahlung reflektierenden Beschichtung 2 mit einer funktionellen Schicht 2a aus ITO und einer darauf aufgedruckten schwarzen Emaille als opaker Abdeckdruck 5. Die Beschichtung 2 auf den erfindungsgemäßen Testscheiben unterschied sich von der Beschichtung 2 auf den Vergleichsscheiben lediglich durch das Material der obersten Schicht 2b: erfindungsgemäß wurde hier SiO₂ eingesetzt, bei den Vergleichsscheibe Si₃N₄.

Die Emaille wurde auf die beschichteten Scheiben bei verschiedenen Temperaturen aufgebracht. Anschließend wurde der Abdeckdruck 5 visuelle bewertet (Oberfläche und entlang einer Bruchkante). Die Beobachtungen sind in Tabelle 3 zusammengefasst.

**Tabelle 3**

| oberste Schicht 2b | T=615 °C | T=650 °C | T=700 °C |
|---|---|---|---|
| SiO₂ | gutes Ergebnis | gutes Ergebnis | gutes Ergebnis |
| Si₃N₄ | Sehr hohe Porosität und Grobkörnigkeit, sehr schlechte Sinterung | Hohe Porosität und Grobkörnigkeit, schlechte Sinterung | Bildung großer Blasen, Ablösen der Emaille |

Die Ergebnisse zeigen, dass die erfindungsgemäße oberste Schicht 2b aus SiO₂ mit dem opaken Abdeckdruck 5 kompatibel ist, nicht jedoch die bekannte oberste Schicht aus Si₃N₄. Dieses Ergebnis war für den Fachmann unerwartet und überraschend.

### Bezugszeichenliste:

- (1): Substrat
- (2): Wärmestrahlung reflektierende Beschichtung
- (2a): funktionelle Schicht von 2
- (2b): oberste Schicht von 2
- (2c): Haftschicht von 2
- (2d): Barriereschicht von 2
- (3): Befestigungs- oder Dichtelement
- (4): Primer
- (5): opaker Abdeckdruck
- (7): Außenscheibe
- (8): thermoplastische Zwischenschicht

- (i): innenraumseitige Oberfläche

- A - A': Schnittlinie
- Z: vergrößerter Ausschnitt

## Patentansprüche

1. Scheibe zur Abtrennung eines Innenraums von einer äußeren Umgebung, mindestens umfassend
- ein Substrat (1),
- eine Wärmestrahlung reflektierende Beschichtung (2) auf der innenraumseitigen Oberfläche (i) des Substrats (1), welche mindestens eine funktionelle Schicht (2a) enthaltend ein transparentes leitfähiges Oxid (TCO) aufweist und deren oberste Schicht (2b) Siliziumdioxid (SiO₂) enthält, und
- ein polymeres Befestigungs- oder Dichtelement (3) auf der Wärmestrahlung reflektierenden Beschichtung (2),
wobei zwischen der Wärmestrahlung reflektierenden Beschichtung (2) und dem Befestigungs- oder Dichtelement (3) ein opaker Abdeckdruck (5) angeordnet ist, welcher direkt auf der Wärmestrahlung reflektierenden Beschichtung (2) aufgebracht ist.

2. Scheibe nach Anspruch 1, wobei das polymere Befestigungs- oder Dichtelement (3) eine Dichtlippe, eine Kleberaupe zur Befestigung der Scheibe oder einen Klebstoff zur Befestigung eines Anbauteils an der Scheibe umfasst.

3. Scheibe nach Anspruch 1 oder 2, wobei das Befestigungs- oder Dichtelement (3) Polyurethan, Polyolefin, Polysulfid, Polyepoxid, Kautschuk wie Naturkautschuk, Nitrilkautschuk (NBR), Styrol-Butadien-Kautschuk, Butadien-Acrylnitril-Kautschuk, Ethylen-Propylen-Dien-Kautschuk, Silikonkautschuk wie RTV-(raumtemperaturvernetzenden) Silikonkautschuk, HTV-(hochtemperturvernetzenden) Silikonkautschuk, peroxidischvernetztenSilikonkautschuk oder additionsvernetzten-Silikonkautschuk, Polyacrylat, Styrol/Butadien-Blockcopolymer (SBS), Ethylen-Propylen-Dien-Kautschuk (EPDM) und/oder ein Thermoplastische Elastomer (TPE) enthält.

4. Scheibe nach Anspruch 1 oder 2, wobei das Befestigungs- oder Dichtelement (3) heiß-, feuchtigkeits- oder UV-härtende Polymere enthält, insbesondere feuchtigkeitsreaktive Schmelzklebstoffe, wie Polyurethan-Präpolymere, Polyester, Polyolefine, Polyamide oder Gemische oder Copolymere davon, oder heißhärtende Klebstoffe, wie Polyurethane, Silikone, Polyacrylate und Polyepoxide (Epoxidharze) oder Gemische davon.

5. Scheibe nach einem der Ansprüche 1 bis 4, wobei das Substrat (1) Glas enthält, bevorzugt Kalk-Natron-Glas.

6. Scheibe nach einem der Ansprüche 1 bis 5, wobei zwischen dem Abdeckdruck (5) und dem Befestigungs- oder Dichtelement (3) ein Primer (4) aufgebracht ist.

7. Scheibe nach Anspruch 6, wobei der Primer (4) Polyisocyanat, reaktives Silan, Methacrylat und/oder Polyurethan enthält.

8. Scheibe nach einem der Ansprüche 1 bis 7, wobei die funktionelle Schicht (2a) zumindest Fluor-dotiertes Zinnoxid, Antimon-dotiertes Zinnoxid und/oder Indium-Zinn-Oxid enthält und bevorzugt eine Dicke von 40 nm bis 200 nm, besonders bevorzugt von 70 nm bis 150 nm aufweist.

9. Scheibe nach einem der Ansprüche 1 bis 8, wobei die oberste Schicht (2b) eine Dicke von 20 nm bis 150 nm aufweist, bevorzugt von 40 nm bis 100 nm.

10. Verfahren zur Herstellung einer Scheibe mit einer Wärmestrahlung reflektierenden Beschichtung und einem polymeren Befestigungs- oder Dichtungselement, wobei:
(a) eine Wärmestrahlung reflektierende Beschichtung (2) auf die innenraumseitige Oberfläche (i) eines Substrats (1) aufgebracht wird, wobei die besagte Beschichtung (2) mindestens eine funktionelle Schicht (2a) enthaltend ein transparentes leitfähiges Oxid (TCO) aufweist und eine oberste Schicht (2b) enthaltend Siliziumdioxid (SiO₂),
(b) ein opaker Abdeckdruck (5) direkt auf die Wärmestrahlung reflektierende Beschichtung (2) aufgedruckt wird und
(c) ein polymeres Befestigungs- oder Dichtungselement (3) auf dem Abdeckdruck (5) angebracht wird.

11. Verfahren nach Anspruch 10, wobei zwischen den Verfahrensschritten (b) und (c) ein Primer (4) auf den opaken Abdeckdruck (5) aufgebracht wird.

12. Verfahren nach Anspruch 10 oder 11, wobei die besagte Beschichtung (2) zwischen den Verfahrensschritten (a) und (b) mit einer Reinigungslösung behandelt wird, welche bevorzugt ein Silan, ein Tensid, einen Alkohol, ein Keton oder Gemische davon enthält.

13. Verwendung einer Scheibe nach einen der Ansprüche 1 bis 9 als Fahrzeugscheibe oder Bestandteil einer Fahrzeugscheibe, insbesondere einer Kraftfahrzeug-Dachscheibe.

## Claims

1. Pane for separating an interior from an external environment, at least comprising
- a substrate (1),
- a thermal-radiation-reflecting coating (2) on the interior-side surface (i) of the substrate (1), which has at least one functional layer (2a) containing a transparent conductive oxide (TCO) and whose topmost layer (2b) contains silicon dioxide (SiO₂), and
- a polymeric fastening or sealing element (3) on the thermal-radiation-reflecting coating (2), wherein an opaque masking print (5) that is applied directly on the thermal-radiation-reflecting coating (2) is arranged between the thermal-radiation-reflecting coating (2) and the fastening or sealing element (3).

2. Pane according to claim 1, wherein the polymeric fastening or sealing element (3) comprises a sealing lip, an adhesive bead for fastening the pane or an adhesive for fastening an attachment part on the pane.

3. Pane according to claim 1 or 2, wherein the fastening or sealing element (3) contains polyurethane, polyolefin, polysulfide, poly-epoxy, rubber such as natural rubber, nitrile rubber (NBR), styrene butadiene rubber, butadiene acrylonitrile rubber, ethylene propylene diene rubber, silicone rubber such as RTV-(room-temperature-vulcanizing) silicone rubber, HTV-(high-temperaturevulcanizing) silicone rubber, peroxide-vulcanizing silicone rubber, or addition-vulcanizing silicone rubber, polyacrylate, styrene/butadiene block copolymer (SBS), ethylene propylene diene rubber (EPDM), and/or a thermoplastic elastomer (TPE).

4. Pane according to claim 1 or 2, wherein the fastening or sealing element (3) contains heat-, moisture-, or UV-curing polymers, in particular moisture-reactive hot-melt adhesives, such as polyurethane-prepolymers, polyesters, polyolefins, polyamides, or mixtures or copolymers thereof, or hot-curing adhesives, such as polyurethanes, silicones, polyacrylates, and poly-epoxies (epoxy resins) or mixtures thereof.

5. Pane according to one of claims 1 through 4, wherein the substrate (1) contains glass, preferably soda lime glass.

6. Pane according to one of claims 1 through 5, wherein a primer (4) is applied between the masking print (5) and the fastening or sealing element (3).

7. Pane according to claim 6, wherein the primer (4) contains polyisocyanate, reactive silane, methacrylate, and/or polyurethane.

8. Pane according to one of claims 1 through 7, wherein the functional layer (2a) contains at least fluorine-doped tin oxide, antimony-doped tin oxide, and/or indium tin oxide and preferably has a thickness of 40 nm to 200 nm, particularly preferably of 70 nm to 150 nm.

9. Pane according to one of claims 1 through 8, wherein the topmost layer (2b) has a thickness of 20 nm to 150 nm, preferably of 40 nm to 100 nm.

10. Method for producing a pane with a thermal-radiation-reflecting coating and a polymeric fastening or sealing element, wherein:
(a) a thermal-radiation-reflecting coating (2) is applied on the interior-side surface (i) of a substrate (1), wherein said coating (2) has at least one functional layer (2a) containing a transparent conductive oxide (TCO) and a topmost layer (2b) containing silicon dioxide (SiO₂),
(b) an opaque masking print (5) is printed directly onto the thermal-radiation-reflecting coating (2), and
(c) a polymeric fastening or sealing element (3) is attached to the masking print (5).

11. Method according to claim 10, wherein, between the process steps (b) and (c), a primer (4) is applied on the opaque masking print (5).

12. Method according to claim 10 or 11, wherein said coating (2) is treated between the process steps (a) and (b) with a cleaning solution, which preferably contains a silane, a surfactant, an alcohol, a ketone, or mixtures thereof.

13. Use of a pane according to one of claims 1 through 9 as a vehicle pane or a component of a vehicle pane, in particular a motor vehicle roof panel.

## Revendications

1. - Vitre pour la séparation d'un espace intérieur d'un environnement extérieur, comprenant au moins
- un substrat (1) ;
- un revêtement (2) réfléchissant le rayonnement thermique sur la surface (i) côté espace intérieur du substrat (1), lequel présente au moins une couche fonctionnelle (2a) contenant un oxyde conducteur transparent (TCO) et dont la couche supérieure (2b) contient du dioxyde de silicium (SiO₂) ; et
- un élément polymère de fixation ou d'étanchéité (3) sur le revêtement (2) réfléchissant le rayonnement thermique,
où, entre le revêtement (2) réfléchissant le rayonnement thermique et l'élément de fixation ou d'étanchéité (3), est disposée une impression de couverture opaque (5), laquelle est appliquée directement sur le revêtement (2) réfléchissant le rayonnement thermique.

2. - Vitre selon la revendication 1, dans laquelle l'élément polymère de fixation ou d'étanchéité (3) comporte une lèvre d'étanchéité, un cordon d'adhésif pour la fixation de la vitre ou un adhésif pour la fixation d'une pièce rapportée sur la vitre.

3. - Vitre selon l'une des revendications 1 et 2, dans laquelle l'élément de fixation ou d'étanchéité (3) contient un polyuréthane, une polyoléfine, un polysulfure, un polyépoxyde, un caoutchouc comme le caoutchouc naturel, le caoutchouc nitrile (NBR), le caoutchouc styrènebutadiène, le caoutchouc butadiène-acrylonitrile, le caoutchouc éthylène-propylène-diène, le caoutchouc de silicone comme le caoutchouc de silicone RTV (réticulant à température ambiante), le caoutchouc de silicone HTV (réticulant à haute température), le caoutchouc de silicone réticulant par voie peroxydique ou le caoutchouc de silicone réticulant par addition, un polyacrylate, un copolymère à blocs styrène/butadiène (SBS), un caoutchouc éthylène-propylène-diène (EPDM) et/ou un élastomère thermoplastique (TPE).

4. - Vitre selon l'une des revendications 1 ou 2, dans laquelle l'élément de fixation ou d'étanchéité (3) contient des polymères durcissant à chaud, à l'humidité ou aux UV, en particulier des adhésifs thermofusibles capables de réagir à l'humidité, comme les prépolymères de polyuréthane, les polyesters, les polyoléfines, les polyamides ou les mélanges ou copolymères de ceux-ci, ou des adhésifs durcissant à chaud, comme les polyuréthanes, les silicones, les polyacrylates et les polyépoxydes (résines époxy) ou les mélanges de ceux-ci.

5. - Vitre selon l'une des revendications 1 à 4, dans laquelle le substrat (1) contient du verre, de préférence du verre sodo-calcique.

6. - Vitre selon l'une des revendications 1 à 5, dans laquelle un primaire (4) est appliqué entre l'impression de couverture opaque (5) et l'élément de fixation ou d'étanchéité (3).

7. - Vitre selon la revendication 6, dans laquelle le primaire (4) contient du polyisocyanate, du silane réactif, du méthacrylate et/ou du polyuréthane.

8. - Vitre selon l'une des revendications 1 à 7, dans laquelle la couche fonctionnelle (2a) contient au moins de l'oxyde d'étain dopé au fluor, de l'oxyde d'étain dopé à l'antimoine et/ou de l'oxyde d'indium et d'étain et présente, de préférence, une épaisseur de 40 nm à 200 nm, de manière particulièrement préférée de 70 nm à 150 nm.

9. - Vitre selon l'une des revendications 1 à 8, dans laquelle la couche supérieure (2b) présente une épaisseur de 20 nm à 150 nm, de préférence de 40 nm à 100 nm.

10. - Procédé de fabrication d'une vitre ayant un revêtement réfléchissant le rayonnement thermique et un élément polymère de fixation ou d'étanchéité, dans lequel :
a) un revêtement (2) réfléchissant le rayonnement thermique est appliqué sur la surface (i) côté espace intérieur d'un substrat (1), ledit revêtement (2) présentant au moins une couche fonctionnelle (2a) contenant un oxyde conducteur transparent (TCO) et une couche supérieure (2b) contenant du dioxyde de silicium (SiO₂) ;
b) une impression de couverture opaque (5) est imprimée directement sur le revêtement (2) réfléchissant le rayonnement thermique ; et
c) un élément polymère de fixation ou d'étanchéité (3) est appliqué sur l'impression de couverture (5).

11. - Procédé selon la revendication 10, dans lequel un primaire (4) est appliqué sur l'impression de couverture opaque (5) entre les étapes de procédé (b) et (c) .

12. - Procédé selon l'une des revendications 10 ou 11, dans lequel ledit revêtement (2) est traité, entre les étapes de procédé (a) et (b), par une solution de nettoyage, laquelle contient de préférence un silane, un tensio-actif, un alcool, une cétone ou des mélanges de ceux-ci.

13. - Utilisation d'une vitre selon l'une des revendications 1 à 9 comme vitre de véhicule ou comme composant d'une vitre de véhicule, en particulier d'une vitre de toit de véhicule automobile.
